# EUROPÄISCHE PATENTANMELDUNG

(11) **EP 2 838 184 A1**
(43) Veröffentlichungstag der Anmeldung: **18.02.2015**
(21) Anmeldenummer: 13180099.7
(22) Anmeldetag: 12.08.2013
(51) Int. Cl.: H02K 15/16

(54) **Läufer einer elektrischen Maschine**

(71) Anmelder: Siemens Aktiengesellschaft, 80333 München (DE)
(72) Erfinder: Bähr, Hubertus, 97631 Bad Königshofen (DE)

(57) **Zusammenfassung**

Die Erfindung betrifft einen Läufer (3) einer dynamoelektrischen Maschine, der auf einer Welle (4) drehfest positioniert ist und der um eine Achse (12) drehbar gelagert ist, wobei an zumindest einer Stirnseite (14) des Läufers (3), zumindest zwei um die Achse unabhängig voneinander bewegbare Massen (5,6,7,8) vorgesehen sind, die an der Stirnseite (14) des Läufers positionsgenau fixierbar sind.

## Beschreibung

Die Erfindung betrifft einen Läufer einer dynamoelektrischen rotatorischen Maschine, der auf einer Welle drehfest positioniert ist und um eine Achse drehbar gelagert ist, und eine dynamoelektrische rotatorische Maschine.

Dynamoelektrische rotatorische Maschinen weisen Läufer auf, die aufgrund von Fertigungstoleranzen als auch Unsymmetrien in ihrer Materialverteilung zu Massenverschiebungen bezüglich ihrer Rotationsachse neigen. Diese Unsymmetrien in der Materialverteilung führen bei rotatorischen Bewegungen zu umlaufende Kräfte, die auch als Unwucht bezeichnet werden, und die insbesondere die Lagerlebensdauer beeinträchtigen.

Um dieses Problem zu beseitigen sind allgemein das positive und negative Wuchten üblich. Bei Positivwuchten wird an der Stelle an der aufgrund einer Massenunsymmetrie Masse fehlt, ein zusätzliches Masseteil von außen angebracht. Dies geschieht beispielsweise durch Stahlelemente oder Wuchtkitt.

Beim Negativwuchten wird Masse gegenüber, also um 180° versetzt, der fehlenden Stelle in gleicher Menge weggenommen. Dies geschieht beispielsweise durch Anbohren an speziell dafür vorgesehenen Stellen oder axiales Verkürzen von Domen.

Diese Verfahren weisen allerdings den Nachteil auf, dass diese zu einer Änderung der gesamten Masse des Rotors gegenüber dem Ursprungszustand führen. Außerdem können sich durch Spanbildung in Folge beispielsweise des Anbohrens diese Späne an magnetisierten Teilen wie z.B. an Permanentmagneten des Läufers anlagern und so beispielsweise den Luftspalt der dynamoelektrischen rotatorischen Maschine beeinträchtigen.

Ausgehend davon liegt der Erfindung die Aufgabe zugrunde, einen Läufer zu schaffen, der in einfacher Art und Weise ermöglicht, solche Massenunsymmetrien in einfacher Art und Weise unter Vermeidung oben genannter Nachteile auszugleichen. Des Weiteren soll bei einer dynamoelektrischen rotatorischen Maschine die Lagerlebensdauer erhöht werden.

Die Lösung der gestellten Aufgabe gelingt durch einen Läufer einer dynamoelektrischen Maschine, der auf einer Welle drehfest positioniert ist und der um eine Achse drehbar gelagert ist, wobei an zumindest einer Stirnseite des Läufers, zumindest zwei um die Achse unabhängig voneinander bewegbare Massen vorgesehen sind, die an der Stirnseite des Läufers positionsgenau fixierbar sind.

Durch die Ausgestaltung von bewegbaren Kasten an zumindest einer Stirnseite des Läufers wird nunmehr die Gesamtmasse des Rotors nicht verändert und es ist eine exakte, positionsgenaue Bewegung der Massen zueinander eine Kompensation der Unsymmetrien in der Materialverteilung des Läufers möglich.

Damit lassen sich außerdem die Unwuchten kompensieren, so dass im Betrieb einer dynamoelektrischen rotatorischen Maschine die Lagerlebensdauer erhöht wird.

Vorteilhafterweise sind die zueinander unabhängig voneinander bewegbaren Massen identisch, so dass bei einer identischen Stellung der beiden Massen in Umfangsrichtung betrachtet, eine maximale Kompensation erfolgen kann. Bei einer gegenüberliegenden Stellung der Massen erfolgt eine neutrale Änderung des Massenschwerpunkts. Durch Verdrehen der beiden Massen zwischen den beiden oben beschriebenen Endstellungen kann eine Veränderung der Unwucht des Läufers von neutral bis maximal erzielt werden. Dies führt dazu, dass man Auswuchtvorgänge ohne Veränderung der Ursprungsmasse und Träger des auszuwuchtenden Teils, also des Läufers, erfolgen kann.

Durch Ausführung der bewegbaren Massen in Form von Zeigern, die insbesondere aufgrund ihrer Basis um die Welle einfach bewegbar sind, kann nunmehr in einfacher Art und Weise eine Unwucht kompensiert werden. Die Drehung der Zeiger um die Welle geschieht in einfacher Art und Weise dadurch, dass die Basis eines Zeigers die Welle umfasst. Bei der Montage des Läufers werden dabei nunmehr die Zeiger mit ihrer Basis auf die Welle gesteckt. Ein positionsgenaues Fixieren der Massen insbesondere der Zeiger erfolgt an der Stirnseite des Läufers dadurch, dass an Endscheiben, die sich an der Stirnseite des Läufers befinden, eine Schnappfixierung der Zeiger an der Endscheibe erfolgt. Diese Schnappfixierung können Schnappverbindungen oder Rastelemente an der Stirnseite des Läufers sein. Dort erfolgt ein Formschluss, des Kopfes eines Zeigers mit den an der Stirnseite des Läufers ausgeprägten korrespondierenden Gegenelementen.

Vorteilhafterweise kann eine positionsgenaue Fixierung der Zeiger dadurch erreicht werden, dass die Zeiger in ihrem Schaft in axialer Richtung bewegbar sind und somit in einfacher Art und Weise in vorgegebene Schnappfixierungsvorrichtung an der Stirnseite einsetzbar sind.

Dies gelingt insbesondere dadurch, dass die Köpfe der Zeiger hammerartig ausgeführt sind und somit eine dementsprechende Massenverteilung eines Zeigers sich möglichst radial weit "außen" erfolgt, also in der Nähe des Außenumfangs des Läufers stattfindet.

Vorteilhafterweise werden derartige Läufer bei dynamoelektrischen rotatorischen Maschinen eingesetzt, wobei dabei aufgrund der identischen Trägheit des Läufers sich auch nach dem Wuchtvorgang das Betriebsverhalten der dynamoelektrischen rotatorischen Maschine nicht verändert. Aufgrund der Kompensation der Unwuchten des Läufers wird die Lebensdauer der Lager der dynamoelektrischen rotatorischen Maschine erhöht.

Die Erfindung sowie weitere vorteilhafte Ausgestaltungen der Erfindung werden anhand eines prinzipiell dargestellten Ausführungsbeispiels näher erläutert. Dabei zeigen:
FIG 1 einen Längsschnitt einer prinzipiell dargestellten dynamoelektrischen Maschine,
FIG 2 eine perspektivische Darstellung eines Läufers.

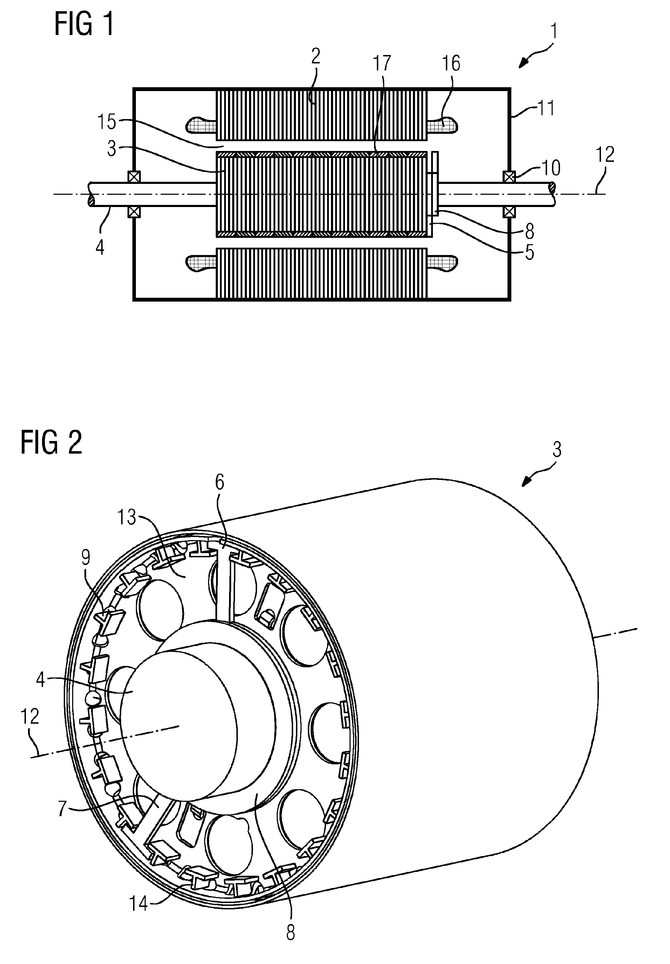

FIG 1 zeigt in einem Längsschnitt eine prinzipiell dargestellte permanenterregte Synchronmaschine, die einen Stator 2 aufweist, der ein in nicht näher dargestellten Nuten angeordnetes Wicklungssystem aufweist, das an den Stirnseiten des Stators 2 Wickelköpfe 16 ausbildet. Über einen Luftspalt 15 dieser dynamoelektrischen Maschine 1 tritt durch elektromagnetische Wechselwirkung des Stators 2 mit dem Läufer 3 im Betrieb der dynamoelektrischen Maschine 1 eine Rotation einer Welle 4 ein. Die Welle 4 rotiert um eine Achse 12, um die auch zeigerähnliche Massen 5 angeordnet sind, die später genauer beschrieben werden. Ein eventuelles Gehäuse der dynamoelektrischen Maschine 1 ist über Lagerschilde 11 und Lager 10 an der Welle 4 abgestützt.

Der Läufer 3 weist an seinem Außenumfang Permanentmagnete 17 auf, die durch eine Bandage gegen die Zentrifugalkräfte positionsgenau auf dem Läufer 3 gehalten werden.

FIG 2 zeigt in einer perspektivischen Darstellung den Läufer 3. Dabei ist an der Stirnseite 14 des Läufers eine Endscheibe 13 angebracht, die insbesondere am radialen Außenumfang Elemente aufweist, die einer Schnappfixierung 9 eines hammerartigen Kopfes 6 eines Zeigers 5 der beweglichen Massen dienen. Die unabhängig voneinander beweglichen Zeiger 5 weisen dabei jeweils eine Basis 8 auf, die um die Welle 4 in einfacher Art und Weise drehbar angeordnet ist und erst bei dem dafür vorgesehenen Winkel in die jeweilige Schnappfixierungen 9 eingesetzt werden. Diese Schnappfixierungen 9 - die aus zeichnerischen Gründen in FIG 1 nicht enthalten sind - werden insbesondere durch eine federnde Kraft des axial auslenkbaren beweglichen Schaft 7 eines Zeigers 5 gehalten.

Es sind auch andere Arten der Schnappfixierung an einer Endscheibe des Läufers 3 möglich, die beispielsweise durch axial erstreckende Stifte im hammerartigen Kopf 6 des Zeigers 5 in die dafür vorgesehenen Ausnehmungen der Endscheibe 13 eingreifen.

Derartige bewegbare Massen sind hier beispielsweise an einer Stirnseite des Läufers 3 aufgezeigt, selbstverständlich können derartige Massen auch an beiden Stirnseiten des Läufers 3 angebracht werden ebenso wie an jeder Stirnseite nur ein Zeiger angebracht werden kann.

Des Weiteren ist der erfinderische Gedanke nicht nur auf permanenterregte Läufer mit Außenmagneten beschränkt, ebenso kann der erfinderische Gedanke auch bei permanenterregten Läufern mit vergrabenen Magneten oder bei Läufern von Asynchronmaschinen mit Käfigläufern eingesetzt werden. Dabei sind die Zeiger in ihrer radialen Ausdehnung durch die axiale Erstreckung des Käfigläufers über die Stirnseite des Läufers 3 hinaus ggf. radial verkürzt auszuführen.

Ebenso lässt sich die Erfindung auch bei elektrisch erregten dynamoelektrischen Maschinen umsetzen.

## Patentansprüche

1. Läufer (3) einer dynamoelektrischen Maschine (1), der auf einer Welle (4) drehfest positioniert ist und der um eine Achse (12) drehbar gelagert ist, wobei an zumindest einer Stirnseite (14) des Läufers (3), zumindest zwei um die Achse (12) unabhängig voneinander bewegbare Massen vorgesehen sind, die an der Stirnseite (14) des Läufers (3) positionsgenau fixierbar sind.

2. Läufer (3) nach Anspruch 1, **dadurch gekennzeichnet, dass** die bewegbaren Massen zeigerähnlich ausgebildet sind und an der Welle (4) eine Basis (8) ausbilden und sich radial erstrecken.

3. Läufer (3) nach Anspruch 1 oder 2, **dadurch gekennzeichnet, dass** die Basis (8) eines Zeigers (5) die Welle (4) umfasst.

4. Läufer (3) nach einem der vorhergehenden Ansprüche, **dadurch gekennzeichnet, dass** eine positionsgenaue Fixierung der Massen, insbesondere der Zeiger (5) durch eine Schnappfixierung (9) der Massen an der Stirnseite (14) des Läufers (3) erfolgt.

5. Läufer (3) nach einem der vorhergehenden Ansprüche, **dadurch gekennzeichnet, dass** die Zeiger (3) in ihrer axialen Richtung auslenkbar sind.

6. Läufer (3) nach einem der vorhergehenden Ansprüche, **dadurch gekennzeichnet, dass** die Zeiger an ihrem radialen Ende hammerartig ausgeführt sind.

7. Dynamoelektrische Maschine mit einem Läufer nach einem der vorhergehenden Ansprüche.
